# EUROPEAN PATENT APPLICATION

(11) **EP 3 730 332 A1**
(43) Date of publication of application: **28.10.2020**
(21) Application number: 19171434.4
(22) Date of filing: 26.04.2019
(51) Int. Cl.: B60K 28/06, B60W 40/08, B60W 50/14, B60W 30/09, B60W 30/12, B60W 30/16, B60W 50/16

(54) **DRIVER DISTRACTION DETERMINATION**

(71) Applicant: Zenuity AB, 417 56 Göteborg (SE)
(72) Inventor: OLSSON, Claes, 435 39 Mölnlycke (SE); GONZALEZ PINTOR, Sebastian, 431 45 Mölndal (SE); BRÄNNLUND, Olle, 417 16 Göteborg (SE)
(74) Representative: Zacco Sweden AB

(57) **Abstract**

A method for determining driver distraction in a vehicle is disclosed. The method comprises receiving (101) a signal comprising information about user-interaction with an in-vehicle human machine interface (HMI), and determining a first state of the driver based on the received information (102). The first state comprises at least one distraction parameter. Further, the method comprises determining (103) a second state of a driver of the vehicle by means of a driver monitoring system (DMS), where the second state of the driver comprises at least one attention parameter, and sending a signal to a control system of the vehicle based on the determined first state of the driver and the determined second state of the driver (104). A corresponding computer-readable storage media, a control device, and a vehicle are also disclosed.

## Description

### TECHNICAL FIELD

The present disclosure relates to the field of autonomous and semi-autonomous driving. In particular, the present disclosure relates to a safety mechanism for verifying driver engagement during autonomous drive.

### BACKGROUND

Conventional collision mitigation systems perform collision mitigation based solely on a detected obstacle in the surrounding area of the vehicle. However, if a driver is fully attentive, mitigation may not be necessary and the driver may find such systems unhelpful and bothersome. In addition, although some existing collision mitigation systems attempt to take driver attentiveness into account, these systems require specifically-designed devices, such as cameras and other sensors, placed within the interior of the vehicle.

Various imaging systems are today used in vehicles to monitor driver and/or passengers in the vehicle. More specifically, the imaging systems generally comprise one or more cameras focused on a driver of the vehicle in order to capture images of the driver's face so to determine a driver state. The driver state is determined based on various facial characteristics of the driver including the position, orientation, and movement of the driver's eyes, face and head. Accordingly, various other vehicle systems can use the determined driver state in order to control different vehicle functions. It is known that lack of driver awareness and alertness contribute to the number of traffic accidents, particularly for long-distance heavy truck drivers who spend many hours on the road. Lack of alertness may delay a driver's response to a traffic condition, which can have catastrophic consequences.

The complexity of vehicle electronics has significantly increased during the last years. To a large extent, this is a result of the development of a large number of new functionalities, which in turn require a significant amount of information to be optically displayed to the driver. This information is typically conveyed via a plurality of Human Machine Interfaces (HMIs), such as the instrument cluster (behind the steering wheel), the center console (i.e. the control-bearing surfaces in the center area of the vehicle interior front beginning in the dashboard and continuing beneath it) and, increasingly often in modern cars, a head up display.

However, the development and integration of new and exciting functionalities in modern day vehicles may present new challenges in terms of road safety. Inevitably, with the large number of functionalities, there is a risk of the driver focusing his/her attention on the HMI instead of on the road and the surrounding traffic. As previously mentioned, lack of alertness or attention can have catastrophic consequences.

There is a need in the art for new methods and systems, which aim to solve problems related with increasingly capable HMI solutions being offered in today's vehicles.

### SUMMARY OF THE INVENTION

It is therefore an object of the present disclosure to provide a method for determining driver distraction in a vehicle, a non-transitory computer-readable storage medium, a vehicle control device, and a vehicle comprising such a vehicle control device, which alleviate all or at least some of the drawbacks of presently known solutions.

This object is achieved by means of a method for determining driver distraction in a vehicle, a non-transitory computer-readable storage medium, a vehicle control device, and a vehicle comprising such a vehicle control device, which alleviate all or at least some of the drawbacks of presently known solutions as defined in the appended claims. The term exemplary is in the present context to be understood as serving as an instance, example or illustration.

According to a first aspect of the present disclosure, there is provided a method for determining driver distraction in a vehicle. The method comprises receiving a signal comprising information about user-interaction with an in-vehicle human machine interface (HMI), and determining a first state of the driver based on the received information. The first state comprises at least one distraction parameter. Further, the method comprises determining a second state of a driver of the vehicle by means of a driver monitoring system (DMS), where the second state of the driver comprises at least one attention parameter, and sending a signal to a control system of the vehicle based on the determined first state of the driver and the determined second state of the driver. The proposed method allows for a robust and cost effective means for monitoring a driver state, and provides options for mitigating any risk associated with driver distractions due to HMI interaction.

A state of the driver (first and second state) is in the present context to be construed as a state of attentiveness, i.e. if the driver is distracted or attentive to the road and/or surrounding traffic. The state of the driver may be determined in a binary fashion (attentive or distracted), or include multiple parameters and data, such as e.g. type of distraction, level of distraction, and so forth. Thus, a distraction parameter may be a parameter comprising information of the (current) level of distraction of the driver, type of distraction, or how long the driver has been distracted, etc. Analogously, an attention parameter may comprise information about the (current) level of distraction or attentiveness, gaze direction, eye opening size, head position, or similar.

An in-vehicle HMI can be understood as a communication bridge between the driver and the car itself or the outside world. Examples of HMIs are instrument clusters, centre consoles/infotainment systems, heads-up displays, etc. A driver monitoring system can be understood as a system comprising one or more cameras focused on a driver of the vehicle in order to capture images of the driver's face so to determine various facial characteristics of the driver including the position, orientation, and movement of the driver's eyes, face and head.

The present inventors realized that a combination of HMI data and DMS data can be used to provide an increased robustness in driver distraction monitoring solutions. In more detail, it was realized that solely relying on HMI data (i.e. data containing information about the driver interaction with the HMI) could render in an unwanted amount of erroneous conclusions. For example, it would be hard to detect, based solely on HMI data, that the driver is still focused on the road or surrounding traffic while interacting with the centre console (e.g. using the touch screen without looking at it). Similarly, the HMI data can compensate for measurement errors of the DMS.

In accordance with an exemplary embodiment, the received information comprises one or more of a touch frequency, a touch length, a type of movement, and a type of function. Accordingly, the first state is determined by evaluating the received information based on at least one predefined scheme comprising at least one of a touch frequency range, touch length range, a plurality of movement types, and a plurality of predefined function types. The predefined scheme allows for a customized and dynamic distraction determination process since different HMI interactions can be weighted in different ways. For example, raising the volume of the speaker system by a "swiping" movement on a touch screen is considered to be less distracting than attempting to find a radio station frequency by a "swiping" movement on a touch screen. Thus, depending on the type of function that is being accessed by the HMI, different "distraction levels" can be determined in the first state.

Further, in accordance with another exemplary embodiment, the method further comprises verifying the determined first state based on the determined second state by comparing the at least one attention parameter with a predefined behaviour model, and the step of sending the signal comprises sending the signal to the control system based on the comparison between the at least one attention parameter and the predefined behaviour model. In other words, the DMS signal can be construed as a verification signal or a "sanity check" of the determined first state. By using the DSM signal for verification, the chances of generating false positives or false negatives when determining a driver distraction level can be reduced.

According to a second aspect of the present disclosure, there is provided a non-transitory computer-readable storage medium storing one or more programs configured to be executed by one or more processors of a vehicle control system, the one or more programs comprising instructions for performing the method according to any one of the herein disclosed embodiments. With this aspect of the disclosure, similar advantages and preferred features are present as in the previously discussed first aspect of the disclosure.

Further, according to a third aspect of the present disclosure, there is provided a vehicle control device for determining driver distraction in a vehicle. The vehicle control device comprises a control circuit (i.e. control unit, controller, processor(s), etc.). The control circuit is configured to receive a signal comprising information about user-interaction with an in-vehicle human machine interface (HMI), and to determine a first state of the driver based on the received information, the first state comprising at least one distraction parameter. Further, the control circuit is configured to determine a second state of a driver of the vehicle by means of a driver monitoring system (DMS) the second state of the driver comprising at least one attention parameter, and to send a signal to a control system of the vehicle based on the determined first state of the driver and the determined second state of the driver. With this aspect of the disclosure, similar advantages and preferred features are present as in the previously discussed first aspect of the disclosure.

According to a fourth aspect of the present disclosure, there is provided a vehicle comprising a Human Machine Interface (HMI) for receiving user input and sending signals comprising information about the received user input. The vehicle further comprises a Driver Monitoring System (DMS) for determining a driver state, and a vehicle control device according to any one of the embodiments disclosed herein. With this aspect of the disclosure, similar advantages and preferred features are present as in the previously discussed first aspect of the disclosure.

Further embodiments of the invention are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the present invention will in the following be further clarified with reference to the embodiments described hereinafter.

### BRIEF DESCRIPTION OF THE DRAWINGS

Further objects, features and advantages of embodiments of the disclosure will appear from the following detailed description, reference being made to the accompanying drawings, in which:
Fig. 1 is a schematic flow chart representation of a method for determining driver distraction in a vehicle according to an embodiment of the present disclosure.
Fig. 2 is a schematic side view illustration of a vehicle comprising a vehicle control device according to an embodiment of the present disclosure.

### DETAILED DESCRIPTION

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

In the following description of exemplary embodiments, the same reference numerals denote the same or similar components.

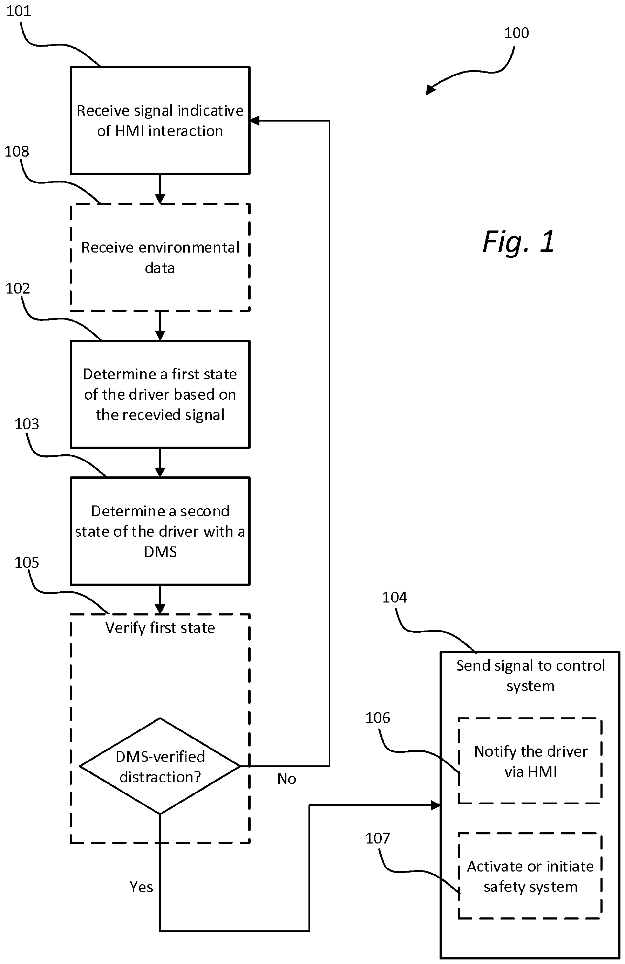

Fig. 1 illustrates a schematic flow chart representation of a method 100 for determining driver distraction in a vehicle. In the present context, driver distraction is to be construed as a state in which the driver's attention is not primarily focused on the road and/or the surrounding traffic. For example, a driver looking at his/her smart phone while driving is considered to be in a state of distraction.

Moving on, the method 100 comprises receiving 101 a signal comprising information about user-interaction with an in-vehicle human machine interface (HMI). An in-vehicle HMI can be understood as a communication bridge between the driver and the car itself or the outside world. Examples of HMIs are instrument clusters, centre consoles/infotainment systems, heads-up displays, etc. The signal can be received 101 directly from the HMI or any intermediate control unit. Next, a first state of the driver is determined 102 based on the received information. The first state of the driver in a simple example defined by attentive or distracted. Moreover, the first state of the driver may include one or more distraction parameters, which can indicate a level of distraction of the driver or other metrics.

The step of determining a first state 102 may comprise determining a type of interaction (e.g. button press, swiping motion, knob rotation, etc., and determining a distraction value based on the determined type of interaction. A distraction value may in the present context be understood as a metric representative of the level or severity of distraction of the driver. The first state can then comprise a distraction parameter in the form of the determined distraction value. Naturally, the step of determining 102 a first state may comprise further sub-steps such as determining a length of interaction (in time) or determining a type of function (e.g. navigation, media player, vehicle settings, etc.) that is currently active. For example, very short interactions can be considered less distracting than lengthy distractions, and similarly, the same swiping/sweeping movement used to change a song on the media player can be considered less distracting than when that swiping/sweeping movement is used to change to a specific radio frequency. The latter example can be understood as a "swiping/sweeping with precision" movement.

In more detail, the received information (originating from the HMI) may comprise at least one of a touch frequency, touch length, a type of movement, and a type of function. Moreover, the first state can be determined by evaluating the received information based on a predefined scheme comprising at least one of a touch frequency range, touch length range, a plurality of movement types, and a plurality of predefined function types. Additionally, or alternatively, the predefined scheme may be based on thresholds and therefore comprise at least one of a touch frequency threshold, touch length threshold, a plurality of movement patterns, and a plurality of function types.

In accordance with an exemplary embodiment, the first state may be based on an output of an algorithm that evaluates the received metrics (i.e. received information) over time windows using non-constant weighting functions. For example, the received signal (originating from the HMI) may comprise information indicating that the driver is attempting to type in an address into a navigation feature of the infotainment system. This type of activity (i.e. type of function) is considered to have a high "distraction value". Moreover, other metrics than the type of function and the type of movement (rotating knob, touch pad presses, button presses), may be evaluated. For example a touch frequency may be included in the evaluation. In more detail, the driver may be providing input to the navigation feature at a varying frequency which can be used to indicate that the driver is not primarily focused on the navigation feature. Each of these metrics can be used as input to a predefined scheme comprising at least one of a touch frequency range, touch length range, a plurality of movement types, and a plurality of predefined function values, in order to output one or more distraction parameters defining the first state.

The method 100 further comprises determining 103 a second state of a driver of the vehicle by means of a driver monitoring system (DMS). The second state comprising at least one attention parameter. Similarly, to the first state, the second state indicates if the driver is distracted or attentive to the road and/or traffic in the surrounding environment of the vehicle. However, in contrast to the first state, the second state is determined based on a different type of data, namely image data comprising various facial characteristics of the driver including the position, orientation, and movement of the driver's eyes, face and head. Once the second state has been determined 103, a signal is sent 104 to a control system of the vehicle based on the determined 102, 103 first and second states.

The method 100 may further comprise a step of verifying 105 the determined 102 first state based on the determined second state by comparing the at least one attention parameter (i.e. the parameter(s) describing the second state) with a predefined behaviour model. Accordingly, the step of sending 104 a signal to a control system of the vehicle, is only performed if the at least one attention parameter exceeds the at least one corresponding threshold value.

In other words, in the proposed method 100, the DMS of the vehicle is used to verify the determined 102 first state. This provides a robustness to the driver distraction determination process since the conclusion is made based on two independent input sources. Thus, the Automotive Safety Integrity Level (ASIL) can be increased by relatively simple and cost effective means.

Further, the method 100 may include receiving 108 environmental data from e.g. a perception system (either local or remote) or a remote server, comprising information about the surrounding environment of the vehicle. The received environmental data may be used in the determination of the first state of the driver and/or the second state of the driver. According to an exemplary embodiment, the environmental data may be used to adjust the weights of the algorithm that evaluates the received metrics or the predefined scheme. For example, the thresholds for determining that the first state is a "distracted state" may be different for when one is traveling on an empty highway road as compared to rush hour traffic in a densely populated area. Specifically, the method 100 may be more lenient for "low risk" traffic situations, i.e. allowing more driver interaction with the HMI. By using environmental data in the decision process the overall solution is more dynamic, rendering in an improved overall user experience.

In accordance with one exemplary embodiment, the step of sending a signal 104 comprises sending a signal to a safety system of the vehicle in order to control 107 the safety system. In a more illustrative example, the first state may indicate that the driver is distracted (e.g. the driver is attempting to find a specific radio station requiring detailed focus on the HMI), and the DMS signal confirmed/verify that conclusion based on that the driver's gaze is primarily focused on the HMI. In order to mitigate any risk of collisions or driving off the road, the lane keep assist may automatically be activated. Alternatively, or additionally, an adaptive cruise control (ACC) system may invoke an increased following distance, or activation thresholds of an emergency brake system may be reduced while the driver is deemed to be "distracted".

Further, the step of sending 104 a signal may comprise sending 106 a signal to an HMI in order to notify the driver. The HMI receiving the signal may be the same HMI as the driver is interacting with (e.g. centre console infotainment system) or any other HMI such as e.g. the loudspeakers, instrument cluster, steering wheel, etc. In more detail, the step of sending 106 a signal may comprise at least one of generating an audio signal to the driver, displaying a message to the driver, generating a tactile feedback (e.g. vibration in steering wheel) to the driver. Alternatively, the step of sending a signal to the HMI may comprise (temporarily) disabling the HMI function, with which the driver is interacting.

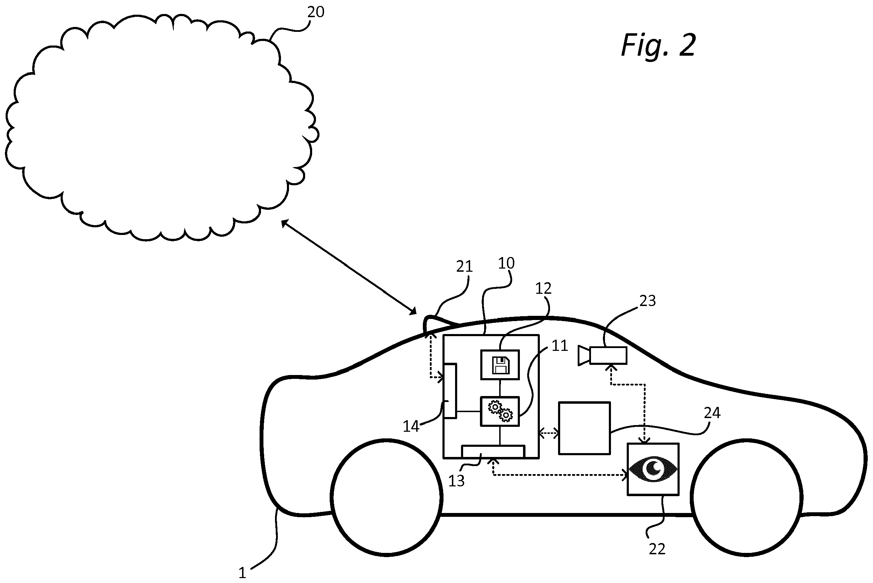

Fig. 2 is a schematic side view illustration of a vehicle 1 comprising a vehicle control device 10 for determining driver distraction in a vehicle. The vehicle control device 10 has a processor (may also be referred to as a control circuit) 11, a memory 12, a sensor interface 13, and a communication interface 14. Naturally, the control device 10 may comprise a plurality of processors 11, memories, 11, sensor interfaces 13, and communication interfaces 14. The vehicle 1 further has an HMI 24 suitable for receiving user input and sending signals comprising information about the user input. The control circuit 11 is configured to execute instructions stored in the memory to perform a method according to any one of the embodiments disclosed herein. Moreover, the vehicle 1 has a DMS 22 in communicative connection with at least one camera 23 arranged to capture images of the driver. The DMS 22 is used to determine a driver state by for example determining a gaze direction, blink frequency, eye opening size, etc. of the driver.

The control circuit 11 of the vehicle control device 10 is configured to receive a signal (e.g. via the sensor interface 13) comprising information about a user interaction with an in-vehicle HMI. For example, the control circuit 11 may receive a signal indicating that a user is changing a radio station by means of a touch input on a touch screen arranged in the centre console. Further, the control circuit 10 is configured to determine a first state of the driver of the vehicle based on the received information. The first state comprises at least one distraction parameter. In more detail, the at least one distraction parameter may be in the form of a value, a function, or any other representation that can be used to indicate a level of distraction of the driver.

Moreover, the control circuit 11 is configured to determine a second state of the driver by means of a driver monitoring system (DMS) 22. The second state of the driver comprises at least one attention parameter. Similarly to the distraction parameter, the attention parameter may be in the form of a value, a function, or any other representation that can be used to indicate a level of attention to the road/traffic of the driver. The control circuit 11 is further configured to send a signal to a control system (not shown) of the vehicle based on the determined first state of the driver and the determined second state of the driver.

Analogously to the above discussion with reference to Fig. 1, the control circuit 10 can be configured to use the DMS signal to verify the HMI distraction conclusion. In more detail, the control circuit 11 can be configured to verify the first state of the driver by receiving a signal from the DMS 22, the received signal comprising information about the at least one attention parameter, and to compare the at least one attention parameter with a predefined behaviour model. Accordingly, the control circuit 11 is configured to send the signal to the control system based on the comparison between the at least one attention parameter and the predefined behaviour model. For example, the signal to the control system can be sent if the at least one attention parameter diverges from the predefined behaviour model.

In an illustrative example, the determined first state of the driver may indicate that the driver is distracted and that the driver maybe is not paying sufficient attention to the road and/or surrounding traffic. However, the DMS 22 signal may indicate that the driver is looking at the road while interacting with the HMI 24, and the determined second state accordingly indicates that the driver is attentive to the road and/or the surrounding traffic. The vehicle 1 may further comprise one or more safety systems (not shown), such as e.g. a lane support system, a collision avoidance system, an emergency brake system, etc. Accordingly, the control system (receiving the signal) may be a safety system of the vehicle 1, and the control circuit 11 is configured to send a signal to a safety system of the vehicle 1 in order to control the safety system. The term to control a safety system is to be interpreted broadly in the present context and may for example be to activate a safety system, deactivate a safety system, control one or more activation thresholds of a safety system, and so forth.

The vehicle 1 may be connected to external network(s) 20 via for instance a wireless link (e.g. for retrieving map data or traffic information). The same or some other wireless link may be used to communicate with other vehicles in the vicinity of the vehicle or with local infrastructure elements. Cellular communication technologies may be used for long range communication such as to external networks and if the cellular communication technology used have low latency it may also be used for communication between vehicles, vehicle to vehicle (V2V), and/or vehicle to infrastructure, V2X. Examples of cellular radio technologies are GSM, GPRS, EDGE, LTE, 5G, 5G NR, and so on, also including future cellular solutions. However, in some solutions mid to short range communication technologies are used such as Wireless Local Area (LAN), e.g. IEEE 802.11 based solutions. ETSI is working on cellular standards for vehicle communication and for instance 5G is considered as a suitable solution due to the low latency and efficient handling of high bandwidths and communication channels.

The present disclosure has been presented above with reference to specific embodiments. However, other embodiments than the above described are possible and within the scope of the disclosure. Different method steps than those described above, performing the method by hardware or software, may be provided within the scope of the disclosure. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

The processor(s) 11 (associated with the control device 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

It should be appreciated that the sensor interface 13 may also provide the possibility to acquire sensor data directly or via dedicated sensor control circuitry in the vehicle. The communication/antenna interface 14 may further provide the possibility to send output to a remote location (e.g. remote operator or control centre) by means of the antenna 21. Moreover, some sensors in the vehicle may communicate with the control device 10 using a local network setup, such as CAN bus, I2C, Ethernet, optical fibres, and so on. The communication interface 14 may be arranged to communicate with other control functions of the vehicle and may thus be seen as control interface also; however, a separate control interface (not shown) may be provided. Local communication within the vehicle may also be of a wireless type with protocols such as WiFi, LoRa, Zigbee, Bluetooth, or similar mid/short range technologies.

Accordingly, it should be understood that parts of the described solution may be implemented either in the vehicle, in a system located external the vehicle, or in a combination of internal and external the vehicle; for instance in a server in communication with the vehicle, a so called cloud solution. For instance, sensor data may be sent to an external system and that system performs the steps to compare the sensor data (movement of the other vehicle) with the predefined behaviour model. The different features and steps of the embodiments may be combined in other combinations than those described.

Exemplary methods, computer-readable storage media, control devices, vehicles, and infrastructure devices are set out in the following items:
1. A method for determining driver distraction in a vehicle, the method comprising:
   receiving a signal comprising information about user-interaction with an in-vehicle human machine interface, HMI;
   determining a first state of the driver based on the received information, the first state comprising at least one distraction parameter;
   determining a second state of a driver of the vehicle by means of a driver monitoring system, DMS, the second state of the driver comprising at least one attention parameter;
   sending a signal to a control system of the vehicle based on the determined first state of the driver and the determined second state of the driver.
2. The method according to item 1, wherein the received information comprises at least one of a touch frequency, a touch length, a type of movement, and a type of function; and
   wherein the first state is determined by evaluating the received information based on at least one predefined scheme comprising at least one of a touch frequency range, touch length range, a plurality of movement types, and a plurality of predefined function types.
3. The method according to item 1 or 2, further comprising:
   verifying the determined first state based on the determined second state by comparing the at least one attention parameter with a predefined behaviour model;
   wherein the step of sending the signal comprises sending the signal to the control system based on the comparison between the at least one attention parameter and the predefined behaviour model.
4. The method according to any one of the preceding items, wherein the step of sending a signal comprises sending a signal to a Human Machine Interface, HMI, in order to notify the driver.
5. The method according to item 4, wherein the step of sending a signal to the HMI, comprises at least one of generating an audio signal to the driver, displaying a message to the driver, generating a tactile feedback to the driver.
6. The method according to any one of the preceding items, wherein the step of sending a signal comprises sending a signal to a safety system of the vehicle in order to control the safety system.
7. The method according to item 6, wherein the safety system is a lane support system, a collision avoidance system, or an emergency brake system.
8. The method according to any one of the preceding items, further comprising:
   receiving data comprising information about a surrounding environment of the vehicle;
   wherein the step of determining the first state of the driver is further based on the received data.
9. A non-transitory computer-readable storage medium storing one or more programs configured to be executed by one or more processors of a vehicle control system, the one or more programs comprising instructions for performing the method according to any one of the preceding items.
10. A vehicle control device comprising:
   at least one processor;
   at least one memory;
   at least one sensor interface;
   wherein the at least one processor is configured to execute instructions stored in the memory to perform a method for determining driver distraction in a vehicle, wherein the at least one processor is configured to:
      receive a signal comprising information about user-interaction with an in-vehicle human machine interface, HMI;
      determine a first state of the driver based on the received information, the first state comprising at least one distraction parameter;
      determine a second state of a driver of the vehicle by means of a driver monitoring system, DMS, the second state of the driver comprising at least one attention parameter;
      send a signal to a control system of the vehicle based on the determined first state of the driver and the determined second state of the driver.
11. The vehicle control device according to item 10, wherein the at least one processor is further configured to:
   verify the first state of the driver by receiving a signal from the DMS, the received signal comprising information about the at least one attention parameter, and to compare the at least one attention parameter with a predefined behaviour model;
   wherein the control circuit is configured to send the signal to the control system based on the comparison between the at least one attention parameter and the predefined behaviour model.
12. The vehicle control device according to item 10 or 11, wherein the control system is a safety system of the vehicle, and wherein the at least one processor is configured to send a signal to a safety system of the vehicle in order to control the safety system.
13. The vehicle control device according to item 12, wherein the safety system is a lane support system, a collision avoidance system, or an emergency brake system.
14. A vehicle comprising:
   a Human Machine Interface, HMI, for receiving user input and sending signals comprising information about the received user input;
   a Driver Monitoring System, DMS, for determining a driver state;
   a vehicle control device according to any one of items 10 - 13.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. For example, the steps of receiving signals comprising information about a movement and information about a current road scenario may be interchanged based on a specific realization. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps and decision steps. The above mentioned and described embodiments are only given as examples and should not be limiting to the present invention. Other solutions, uses, objectives, and functions within the scope of the invention as claimed in the below described patent embodiments should be apparent for the person skilled in the art.

## Claims

1. A method for determining driver distraction in a vehicle, the method comprising:
receiving a signal comprising information about user-interaction with an in-vehicle human machine interface, HMI;
determining a first state of the driver based on the received information, the first state comprising at least one distraction parameter;
determining a second state of a driver of the vehicle by means of a driver monitoring system, DMS, the second state of the driver comprising at least one attention parameter;
sending a signal to a control system of the vehicle based on the determined first state of the driver and the determined second state of the driver.

2. The method according to claim 1, wherein the received information comprises at least one of a touch frequency, a touch length, a type of movement, and a type of function; and
wherein the first state is determined by evaluating the received information based on at least one predefined scheme comprising at least one of a touch frequency range, touch length range, a plurality of movement types, and a plurality of predefined function types.

3. The method according to claim 1 or 2, further comprising:
verifying the determined first state based on the determined second state by comparing the at least one attention parameter with a predefined behaviour model;
wherein the step of sending the signal comprises sending the signal to the control system based on the comparison between the at least one attention parameter and the predefined behaviour model.

4. The method according to any one of the preceding claims, wherein the step of sending a signal comprises sending a signal to a Human Machine Interface, HMI, in order to notify the driver.

5. The method according to claim 4, wherein the step of sending a signal to the HMI, comprises at least one of generating an audio signal to the driver, displaying a message to the driver, generating a tactile feedback to the driver.

6. The method according to any one of the preceding claims, wherein the step of sending a signal comprises sending a signal to a safety system of the vehicle in order to control the safety system.

7. The method according to claim 6, wherein the safety system is a lane support system, a collision avoidance system, or an emergency brake system.

8. The method according to any one of the preceding claims, further comprising:
receiving data comprising information about a surrounding environment of the vehicle;
wherein the step of determining the first state of the driver is further based on the received data.

9. A non-transitory computer-readable storage medium storing one or more programs configured to be executed by one or more processors of a vehicle control system, the one or more programs comprising instructions for performing the method according to any one of the preceding claims.

10. A vehicle control device for determining driver distraction in a vehicle, the vehicle control device comprising a control circuit configured to:
receive a signal comprising information about user-interaction with an in-vehicle human machine interface, HMI;
determine a first state of the driver based on the received information, the first state comprising at least one distraction parameter;
determine a second state of a driver of the vehicle by means of a driver monitoring system, DMS, the second state of the driver comprising at least one attention parameter;
send a signal to a control system of the vehicle based on the determined first state of the driver and the determined second state of the driver.

11. The vehicle control device according to claim 10, wherein the control circuit is further configured to:
verify the first state of the driver by receiving a signal from the DMS, the received signal comprising information about the at least one attention parameter, and to compare the at least one attention parameter with a predefined behaviour model;
wherein the control circuit is configured to send the signal to the control system based on the comparison between the at least one attention parameter and the predefined behaviour model.

12. The vehicle control device according to claim 10 or 11, wherein the control system is a safety system of the vehicle, and wherein the control circuit is configured to send a signal to a safety system of the vehicle in order to control the safety system.

13. The vehicle control device according to claim 12, wherein the safety system is a lane support system, a collision avoidance system, or an emergency brake system.

14. A vehicle comprising:
a Human Machine Interface, HMI, for receiving user input and sending signals comprising information about the received user input;
a Driver Monitoring System, DMS, for determining a driver state;
a vehicle control device according to any one of claims 10 - 13.
